# EUROPEAN PATENT APPLICATION

(11) **EP 1 328 032 A1**
(43) Date of publication of application: **16.07.2003**
(21) Application number: 01970297.6
(22) Date of filing: 28.09.2001
(51) Int. Cl.: H01M 8/04, H01M 4/86, H01M 4/88

(54) **FUEL CELL AND METHOD FOR PREPARATION THEREOF**

(30) Priority: 29.09.2000 JP 2000301409; 19.01.2001 JP 2001012207
(71) Applicant: Sony Corporation, Tokyo 141-0001 (JP)
(72) Inventor: YAMAURA, Kiyoshi, Shinagawa-ku, Tokyo 141-0001 (JP); IMAZATO, Minehisa, Shinagawa-ku, Tokyo 141-0001 (JP); KANEMITSU, Toshiaki, Shinagawa-ku, Tokyo 141-0001 (JP); SATO, Nobuaki, Shinagawa-ku, Tokyo 141-0001 (JP); KATORI, Kenji, Shinagawa-ku, Tokyo 141-0001 (JP); SHIRAI, Katsuya, Shinagawa-ku, Tokyo 141-0001 (JP); TANAKA, Koichi, Shinagawa-ku, Tokyo 141-0001 (JP)
(74) Representative: Rupp, Christian, Dipl.-Phys.
(86) International application number: PCT/JP01/08595
(87) International publication number: WO 02/027850

(57) **Abstract**

A fuel cell easy to manufacture and superior in cell characteristics. The fuel cell has a proton conductor film on a surface of which a metal catalyst layer is formed. This metal catalyst layer operates as a fuel electrode and as an oxygen electrode. The metal catalyst layer is formed directly on the proton conductor film by one of sputtering, vacuum deposition and CVD. By the metal catalyst layer operating as a fuel electrode or as an oxygen electrode, the electrode thickness can be drastically reduced to improve the cell characteristics such as energy density.

## Description

### Technical Field

This invention relates to a fuel cell and a method for the preparation thereof.

### Background Art

Recently, a need is felt for the a substitute clean energy which may take the place of a fossil fuel, such as petroleum. For example, a hydrogen gas fuel is attracting notice.

Since hydrogen has a large energy contained per unit weight and, in use, does not emit obnoxious gases or gases contributing to global warming, it may be said to be an ideal energy source which is clean and moreover plentiful in supply.

In particular, researches in a fuel cell, capable of recovering an electrical energy from the hydrogen energy are proceeding briskly and expectations are being made for application in large scale power generation or on-site self-generation of power or as a power source for an electric vehicle.

The fuel cell includes a fuel electrode, such as a hydrogen electrode, and an oxygen electrode, arranged on both sides of a proton conductor film. By supplying fuel (hydrogen) and oxygen to these electrodes to induce a cell reaction to develop an electromotive force. In preparing the fuel cell, the proton conductor film, fuel electrode and the oxygen electrode are routinely molded separately and bonded together.

However, in forming the fuel electrode and the oxygen electrode separately, a variety of inconveniences arise due to difficulties encountered in handling. For example, if the strength of the fuel electrode or the oxygen electrode is taken into consideration, a certain thickness, for example, a thickness on the order of 100 µm or more, is needed. However, if the electrode thickness becomes larger, the cell reaction is lowered in efficiency, thus lowering the cell performance. If, in order to evade this, the electrode thickness is decreased, the electrolyte film cannot be handled as an independent film, so that production yield is lowered significantly.

### Disclosure of the Invention

It is therefore an object of the present invention to provide a fuel cell which is easy to manufacture and superior in cell performance, and a method for the preparation of the fuel cell.

For accomplishing this object, the present inventors have conducted a variety of researches, and found that layers of metal catalyst may be used as a fuel cell or as an oxygen cell.

The present invention, completed on the basis of experimental results, consists in a fuel cell in which a layer of a metal catalyst is formed on a surface of a proton conductor film and operates as a fuel electrode and/or as an oxygen electrode.

According to the present invention, the metal catalyst layer operates as a fuel electrode or as an oxygen electrode and is directly formed on the proton conductor film operating as a support. Thus, it is unnecessary to handle the fuel electrode or the oxygen electrode separately, or to take mechanical strength into consideration. Consequently, the fuel and oxygen electrodes can be drastically reduced in thickness, as a result of which the cell reaction may proceed efficiently to improve the cell performance as well as the energy density.

Moreover, in the present invention, the metal catalyst layer includes ventilation openings for supplying the fuel or oxygen gases. By the metal catalyst layer including the ventilation openings for supplying the fuel or oxygen gases, the cell reaction may proceed more efficiently, without obstructing the electrode reaction, thus further improving the cell performance.

Additionally, the proton conductor film desirably exhibits thermal resistance. From this perspective, it is desirable that the proton conductor film is formed by a matrix of a carbonaceous material mainly composed of carbon and into which proton dissociative groups are introduced.

The present invention also resides in a method for the preparation of a fuel cell including forming a layer of a catalyst metal on a surface of a proton conductor film by one of sputtering, vacuum deposition and CVD.

With the method for the preparation of a fuel cell, according to the present invention, electrodes of a fuel cell can be produced by a simplified technique which is based on the gas phase film-forming method.

With the method for the preparation of a fuel cell, according to the present invention, fine particles of a material different from the catalyst metal are sprinkled before forming the layer of the catalyst metal on a surface of the proton conductor film and, after forming the layer of the catalyst metal, the fine particles are removed to form ventilation openings in the layer of the catalyst metal.

With the method for the preparation of a fuel cell, according to the present invention, the particle size of the fine particles is preferably larger than the thickness of the layer of the catalyst metal. By having the particle size of the fine particles larger than the thickness of the layer of the catalyst metal, ventilation openings can be formed more reliably in the layer of the catalyst metal.

As the fine particles, fine particles of silica are preferably used. In this case, silica powders sprinkled on the surface of the proton conductor film can be effectively removed by ion milling or etching employing a fluorine-containing solution or a fluorine-containing gas.

As the fine particles, fine particles of tin oxide may also preferably be used. In this case, tin oxide powders sprinkled on the surface of the proton conductor film can be effectively removed by ion milling or etching employing a fluorine-containing solution or a fluorine-containing gas.

The other objects of the present invention and specific advantages provided by the present invention will be clarified further from the following description of embodiments.

### Brief Description of the Drawings

Fig.1 is a schematic cross-sectional view showing a basic structure of a fuel cell.
Fig.2 is a schematic cross-sectional view showing essential portions of electrodes of the fuel cell.
Fig.3 is a schematic cross-sectional view showing the state in which fine particles of a material different in nature from a catalyst metal are sprinkled on a surface of a proton conductor film.
Fig.4 is a schematic view showing various examples of a carbon cluster.
Fig.5 is a schematic view showing another example of a carbon cluster (partial fullerene structure).
Fig.6 is a schematic view showing still another example of a carbon cluster (diamond structure).
Fig.7 is a schematic view showing yet another example of a carbon cluster (plural clusters bonded together).

### Best Mode for Carrying out the Invention

Referring to the drawings, a fuel cell and a manufacturing method therfor according to the present invention will be explained in detail.

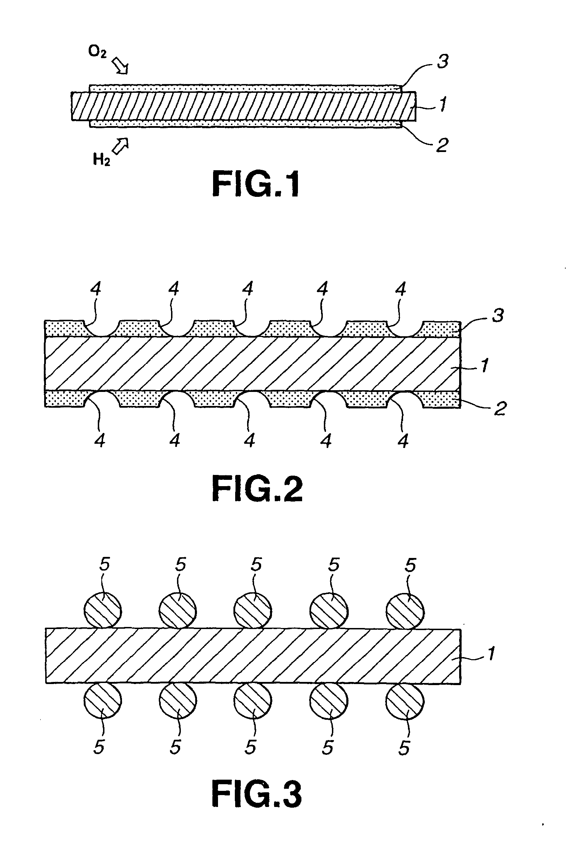

Fig.1 shows the structure of a fuel cell according to the present invention. Basically, the fuel cell is comprised of a proton conductor film 1, exhibiting proton conductivity, and layers of metal catalyst 2, 3 formed on both surfaces thereof. The material forming the metal catalyst layers 2, 3 may be exemplified by metals, such as platinum, palladium, iridium or rhodium, or an alloy containing at least one of these metals, and is directly formed on the proton conductor film 1 by e.g., sputtering.

The fuel cell according to the present invention features using these metal catalyst layers 2, 3 directly as a fuel cell or as an oxygen cell. So, there is no necessity of separately providing a fuel cell or an oxygen cell, formed e.g., of a carbonaceous material, on the metal catalyst layers 2, 3, so that these electrodes may be reduced significantly in thickness. Specifically, the thickness of the metal catalyst layers 2, 3 may be set to a value on the order of 10Å to 100Å. The fact that the metal catalyst layers 2, 3 can be reduced appreciably in thickness leads to significantly improved energy density.

It is another feature of the fuel cell of the present invention that these metal catalyst layers 2, 3 are provided with ventilation openings 4, as shown in Fig.2. That is, since the present fuel cell has the ventilation openings 4 for supplying the fuel gas or the oxygen gas without impediments to the three-phase boundary where the catalyst, proton conductor and the reaction gases meet one another, the electrode reaction may be performed more efficiently, without being obstructed, thus further improving the cell performance.

It is a significant feature of the manufacturing method of the fuel cell according to the present invention that one or more of the PVD and CVD techniques, such as sputtering method or vacuum deposition method, is used as the technique for forming the metal catalyst layers 2, 3. By using these techniques, the metal catalyst layers 2, 3 may be produced extremely readily.

In forming the ventilation openings 4, fine particles 5 of a material different from the metal catalyst may be sprinkled on the surface of the proton conductor film 1, as shown in Fig.3, before forming the metal catalyst layers 2, 3. The fine particles 5 are removed after forming the metal catalyst layers 2, 3 to form the ventilation openings 4 in the metal catalyst layers 2, 3.

The particle size of the fine particles 5 is preferably larger than the thickness of the metal catalyst layers 2, 3. By having particle size of the fine particles 5 larger than the thickness of the metal catalyst layers 2, 3, the ventilation openings 4 can be formed reliably in the metal catalyst layers 2, 3.

Although the fine particles 5 are preferably formed of silica or tin oxide, various other metals or compounds such as oxides or nitrides thereof may also be used provided that the fine particles 5 can be formed reliably therein.

The fine particles 5 may be removed by a method conforming to the material types of the fine particles. For example, if the fine particles 5 are formed of silica, the fine particles 5 of silica, sprinkled on the surface of the proton conductor film 1, may effectively be removed by ion milling or etching employing a fluorine-containing solution or a fluorine-containing gas.

If the fine particles 5 are formed of tin oxide, the fine particles 5 of tin oxide, sprinkled on the surface of the proton conductor film 1, may effectively be removed by ion milling or etching employing a chlorine-containing solution or a chlorine-containing gas.

In the above-described fuel cell, if one 2 of the metal catalyst layers is a fuel electrode, and hydrogen, for example, is supplied thereto, hydrogen is converted into proton by the catalytic action of the metal catalyst layer 2 and is migrated through the inside of the proton conductor film 1. If the other metal catalyst layer 3 is the oxygen electrode, and oxygen is supplied thereto, the cell reaction takes place to produce the electromotive force.

As the proton conductor film 1, any optional film may be used provided that it exhibits protonic conductivity. For example, a separator coated with a material exhibiting protonic conductivity may be used.

Specifically, the materials usable as the proton conductor film 1 may be enumerated by a high molecular material capable of conducting protons (hydrogen ions), such as perfluorosulfonic acid resin, for example, Nafion(R) manufactured by Du Pont SA.

As proton conductors, developed only recently, polymolybdenic acids or oxides having a large number of hydrates, such as H₃Mo₁₂PO₄₀·29H₂O or Sb₂O₅·5.4H₂O, may be used.

If placed in a wet state, these high molecular materials exhibit high proton conductivity at or near ambient temperature. Taking the perfluorosulfonic acid resin as an example, protons electrically dissociated from the sulfonic acid group is bound with the moisture taken in large quantities into the high molecular matrix by a hydrogen bond to generate protonated water, that is oxonium ions (H₃O⁺), such that protons can be smoothly migrated in the high molecular matrix in the form of these oxonium ions. So, this type of the matrix material may exhibit appreciably high proton conductivity even at or near ambient temperature.

Alternatively, a proton conductor having a conduction mechanism totally different from that of the aforementioned materials may also be used. These alternative materials are composite metal oxides having a perovuskite structure, such as Yb-doped SrCeO₃. These composite metal oxides having a perovuskite structure, have been found to exhibit protonic conductivity without having recourse to the moisture as the medium for movement. In these composite metal oxides, the protons are felt to be conducted by channeling by themselves through oxygen ions forming the skeleton of the perovuskite structure.

However, since the metal catalyst layers 2, 3 are directly formed by sputtering, the proton conductor film 1 preferably exhibits certain thermal resistance. The proton conductor material is preferably selected in this perspective.

In the above sputtering method, the temperature of the basic proton conductor film 1 becomes not lower than 120°C. For example, the temperature can be grasped by mixing particulate In and checking for the possible presence of the trace of dissolution of the In particles. In actuality, such trace of dissolution could be observed with SEM following sputtering with In particles (1 µm in diameter) set on the film. The melting point of the In particles was 155°C.

Such proton conductor comprised of a carbonaceous material mainly composed of carbon and proton dissociative groups introduced in the carbonaceous material is desirable in view of advantages such as thermal resistance and possibility of omission of humidification.

Such proton conductor is high in tensile shearing strength (1t/cm tension: for a film thickness of 25 µm) even at a temperature exceeding 120°C, so that no shearing is produced, as may be seen from the following Table 1:

**Table 1**

| heating temperature (°C) | shearing |
|---|---|
| 40 | none |
| 60 | none |
| 80 | none |
| 100 | none |
| 120 | none |
| 140 | none |
| 160 | none |
| 180 | none |
| 200 | occurred |

It should be noted that the "proton dissociative groups" mean functional groups from which protons (H⁺) can be detached on electrical dissociation.

The proton dissociative groups may be enumerated by -OH, - OSO₃H, -SO₃H, -COOH, and -OPO(OH)₂.

In this proton conductor, protons are migrated through the proton dissociative groups to manifest ion conductivity.

As the carbonaceous material, forming the matrix, any suitable material, mainly composed of carbon, may be used. It is however necessary for the ion conductivity to be larger than the electronic conductivity after introducing the proton dissociative groups.

Specifically, a carbon cluster, as an aggregate of carbon atoms, or tubular carbon materials, or so-called carbon nano-tubes, may be used as the carbonaceous material.

Among a variety of carbon clusters, fullerene, a fullerene structure having an opening end at least at a portion thereof, or a diamond structure, is preferred.

This carbon cluster is explained further in detail.

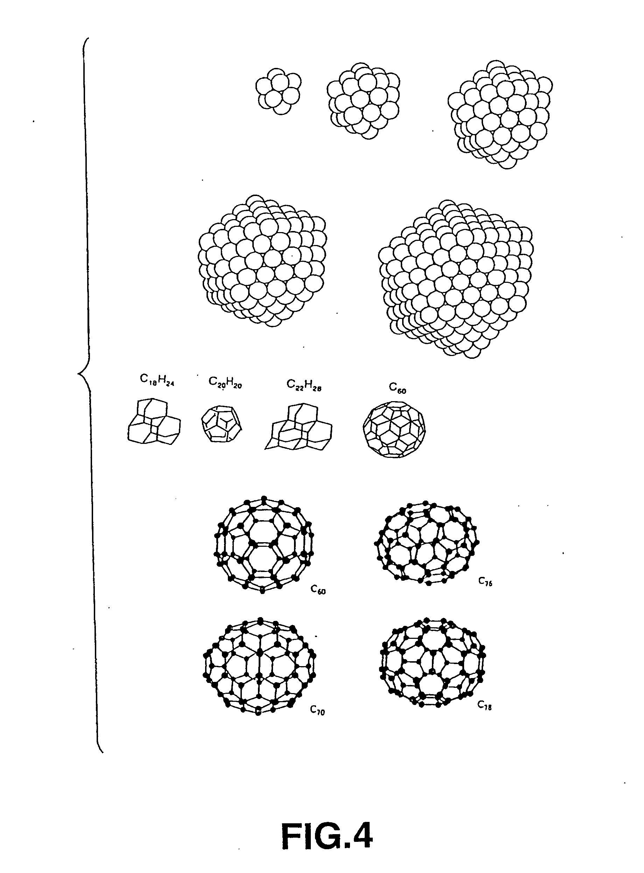

A cluster routinely means an aggregate of several to hundreds of atoms, bound or flocculated together. If these atoms are carbon atoms, such flocculation or aggregation improves proton conductivity while simultaneously holding chemical properties to provide for sufficient film strength and for ease in forming layers. A 'cluster mainly composed of carbon' means an aggregate of several to hundreds of carbon atoms regardless of the type of the carbon-carbon bonds. Such cluster may, however, not be composed only of carbon atoms, such that other atoms may be present with the carbon atoms. Thus, in order to encompass such case, an aggregate the major portion of which is composed of carbon atoms is termed a carbon cluster. Examples of these aggregates are shown in Figs.4 to 7 in which the proton dissociative groups are omitted. It may be seen that there are a wide latitude for selection of types of proton conducting materials.

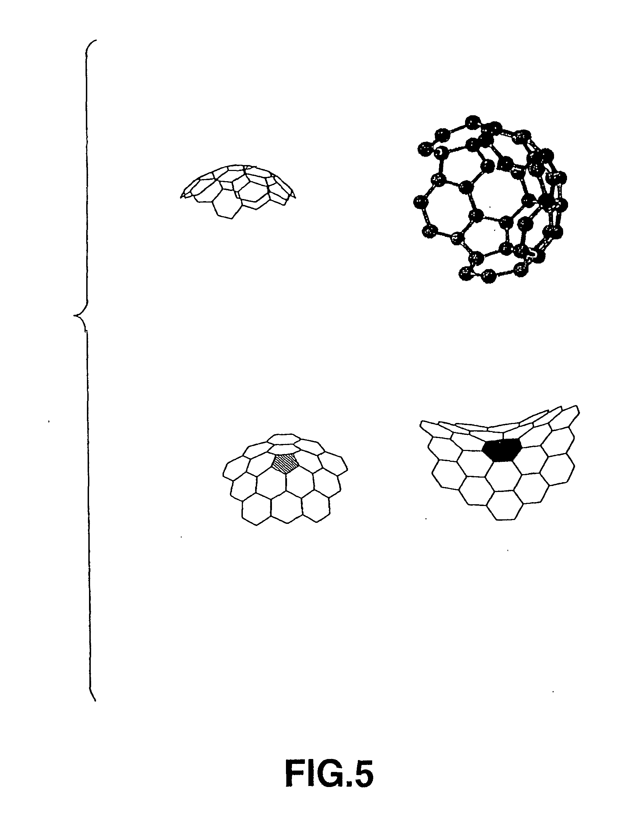

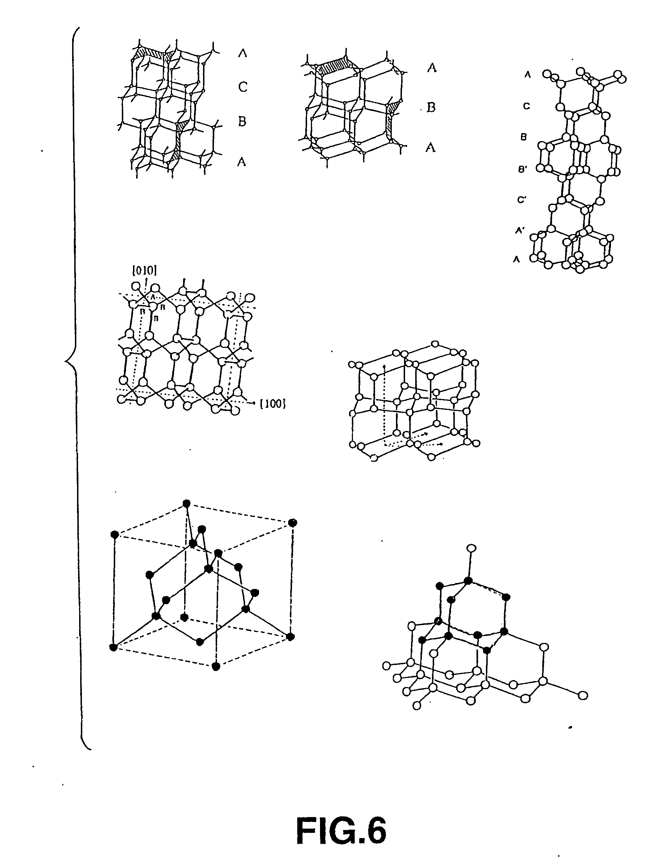

Fig.4 shows a variety of carbon clusters, each composed of a large number of carbon atoms and each having the structure of a closed surface similar to that of a sphere, an elongated ball and so forth. In Fig.4, molecular fullerenes are also shown. Fig.5 shows a variety of carbon clusters the spherical structures of which are partially interrupted. These types of the carbon clusters feature open ends in the structures. A large number of such structures may be seen as by-products in the process of the fullerene manufacturing process by arc discharge. If the major portion of the carbon atoms of the carbon cluster are bound in an SP³ bond, a diamond structure is produced, such as is shown in the structure of the various clusters shown in Fig.6.

Fig.7 shows several examples in each of which different clusters are bound together. The present invention may be applied to this type of the structure.

In the proton conductor containing, as main component, the aforementioned carbonaceous material having proton dissociative groups, protons tend to be dissociated from the groups, even in a dried state. Moreover, these protons are able to exhibit high conductivity over a wide temperature range including the ambient temperature, such as a temperature range at least from 160°C to -40°C. Although this proton conductor exhibiting sufficient proton conductivity even in a dried state, the presence of the moisture may be tolerated. Such moisture may be that intruded from outside.

According to the present invention, the metal catalyst layers 2, 3 are directly formed on the proton conductor film 1 formed of the aforementioned materials.

As the technique for forming the metal catalyst layers 2, 3 one or more of the PVD and CVD techniques, such as sputtering method or vacuum deposition method, may be used.

The present invention is now explained based on specified test results. That is, fuel cell samples were prepared in accordance with the present invention and tests on power generation were conducted to evaluate their characteristics.

### Example 1

First, a proton conductor film, 0.1 µm in thickness, containing hydrogen sulfate esterified fullarenol and polyvinyl alcohol as a binder, was prepared.

This proton conductor film was placed in a reaction chamber of a DC sputtering device CCS1200 (trade name of a product of TOKUDA CO., LTD.) having a platinum target 5 inch in diameter, and the inside of the reaction chamber was evacuated to 10 Pa or less. An argon gas was then introduced into the reaction chamber to set the pressure in the reaction chamber to 1.33×10⁴ Pa. Using a platinum piece as a target, RF sputtering was carried out at an output of 100W to form a platinum film 10 nm in thickness on each major surface of the proton conductor film.

The so produced proton conductor film, carrying platinum films on its both major surfaces, was built into a fuel cell. One of these platinum films was used as a fuel electrode, while the other was used as an oxygen electrode. A hydrogen gas, with a purity not lower than 99.9%, was supplied at one atmospheric pressure to the fuel electrode, while an oxygen gas with a purity not lower than 99.9%, was supplied at one atmospheric pressure to the oxygen electrode, by way of carrying out a test on power generation.

As a result of the above-described power generation test, an output of 40 mW/cm² was obtained at an output voltage of 0.6 V in the fuel cell of Example 1. The fuel cell of Example 1 was confirmed to be operating normally as a fuel cell to develop a satisfactory output. That is, it may be said that a fuel cell having a satisfactory output can be realized by forming a platinum film as a layer of a metal catalyst on each major surface of the proton conductor film, so that one of the platinum films is used as a fuel electrode and the other is used as an oxygen electrode.

### Example 2

In Example 2, silica powders with an average particle size of 50 nm were sprinkled on each major surface of the proton conductor film prepared in Example 1 at a rate of 0.1 mg per cm².

On each major surface of the proton conductor film, besprinkled with silica powders, a platinum film 10 nm in thickness was formed in the same way as in Example 1, using an RF sputtering device. The proton conductor film, now carrying the platinum film, was then processed with a fluorine-containing solution, to remove the silica powders. This forms ventilation openings on the platinum film surface for positively supplying a hydrogen gas or an oxygen gas, as later explained.

The so produced proton conductor film, carrying platinum films on its both major surfaces, was built into a fuel cell. One of these platinum films was used as a fuel electrode, while the other was used as an oxygen electrode. A hydrogen gas, with a purity not lower than 99.9%, was supplied at one atmospheric pressure to the fuel electrode, while an oxygen gas, with a purity not lower than 99.9%, was supplied at one atmospheric pressure to the oxygen electrode, by way of carrying out a power generating test.

As a result of the above-described power generation test, an output of 61 mW/cm² was obtained at an output voltage of 0.6 V in the fuel cell of Example 1. The fuel cell of Example 2 was confirmed to be operating as normally as a fuel cell to develop an output which was more satisfactory than with the fuel cell of Example 1. Thus, it may be said that, by forming the ventilation openings in the surface of the platinum film, the output of the fuel cell can be improved further.

### Example 3

In Example 3, tin oxide powders with an average particle size of 100 nm were sprinkled on each major surface of the proton conductor film prepared in Example 1 at a rate of 0.1 mg per cm².

On each major surface of the proton conductor film, besprinkled with the tin oxide powders, a platinum film 10 nm in thickness was formed, using an RF sputtering device, in the same way as in Example 1. The proton conductor film, now carrying the platinum film, was etched, using a chlorine gas, to remove the tin oxide powders. This forms ventilation openings for reliably supplying the hydrogen gas or the oxygen gas in the platinum film surface.

The so produced proton conductor film, carrying platinum films on its both major surfaces, was built into a fuel cell. One of these platinum films was used as a fuel electrode, while the other was used as an oxygen electrode. A hydrogen gas, with a purity not lower than 99.9% was supplied at one atmospheric pressure to the fuel electrode, while an oxygen gas, with a purity not lower than 99.9%, was supplied at one atmospheric pressure to the oxygen electrode, by way of carrying out a power generating test.

As a result of the above-described power generation test, an output of 58 mW/cm² was obtained at an output voltage of 0.6 V in the fuel cell of Example 3. The fuel cell of Example 3 was confirmed to be operating as normally as a fuel cell to develop an output which was more satisfactory than with the fuel cell of Example 1. Thus, it may be said that, by forming the ventilation openings in the surface of the platinum film, the output of the fuel cell can be improved further.

### Industrial Applicability

According to the present invention, since the metal catalyst layer operates as a fuel electrode or as an oxygen electrode, the fuel and oxygen electrodes can be drastically reduced in thickness. Consequently, it is possible to provide the fuel cell having superior cell performance such as energy density.

In the method for the preparation according to the present invention, it is unnecessary to handle the fuel electrode or the oxygen electrode separately since the metal catalyst layer is directly formed on the proton conductor film operating. As a result of which, the tangled operation is unnecessary so that the production yield is significantly improved .

## Claims

1. A fuel cell comprising:
a proton conductor film; and
a metal catalyst layer which is formed on a surface of a proton conductor film, wherein the metal catalyst layer operates a fuel electrode and/or as an oxygen electrode.

2. The fuel cell according to claim 1 wherein said layer of the metal catalyst contains at least one selected from the group consisting of platinum, palladium, iridium and rhodium.

3. The fuel cell according to claim 1 wherein said layer of the metal catalyst includes ventilation openings.

4. The fuel cell according to claim 1 wherein said proton conductor film has thermal resistance.

5. The fuel cell according to claim 1 wherein said proton conductor film is formed by a matrix of a carbonaceous material mainly composed of carbon and proton dissociative groups introduced into said carbonaceous material.

6. A method for the preparation of a fuel cell comprising:
forming a layer of a catalyst metal on a surface of a proton conductor film by one of sputtering, vacuum deposition and CVD.

7. The method for the preparation of a fuel cell according to claim 6 wherein, before forming said layer of the catalyst metal, fine particles of a material different from the catalyst metal are sprinkled on a surface of said proton conductor film, and wherein, after forming the layer of the catalyst metal, said fine particles are removed to form ventilation openings in said layer of the catalyst metal.

8. The method for the preparation of a fuel cell according to claim 7 wherein the particle size of said fine particles is larger than the thickness of said layer of the catalyst metal.

9. The method for the preparation of a fuel cell according to claim 7 wherein said fine particles are of silica.

10. The method for the preparation of a fuel cell according to claim 9 wherein said fine particles are removed by ion milling or by etching employing a fluorine containing solution or a fluorine containing gas.

11. The method for the preparation of a fuel cell according to claim 7 wherein said fine particles are of tin oxide.

12. The method for the preparation of a fuel cell according to claim 11 wherein said fine particles are removed by ion milling or by etching employing a fluorine containing solution or a fluorine containing gas.
